# EUROPÄISCHE PATENTANMELDUNG

(11) **EP 4 206 447 A1**
(43) Veröffentlichungstag der Anmeldung: **05.07.2023**
(21) Anmeldenummer: 22150213.1
(22) Anmeldetag: 04.01.2022
(51) Int. Cl.: F02B 39/10, F04D 25/02, F04D 29/44, F04D 29/42, H02K 5/16, H02K 7/14

(54) **MEDIENSPALTMOTOR FÜR EIN BRENNSTOFFZELLENSYSTEM, BRENNSTOFFZELLENSYSTEM UND VERWENDUNG**

(71) Anmelder: G+L Innotec GmbH, 88471 Laupheim (DE)
(72) Erfinder: HEBER, Ralf, 89155 Erbach-Ersingen (DE); GÖDEKE, Holger, 88480 Stetten (DE); KLUNKER, Christoph, 80797 München (DE)
(74) Vertreter: Pfenning, Meinig & Partner mbB

(57) **Zusammenfassung**

Die vorliegende Anmeldung betrifft einen Medienspaltmotor (10) sowie ein Brennstoffzellensystem (1) mit einem Medienspaltmotor (10). Außerdem betrifft die Anmeldung eine Verwendung des Medienspaltmotors (10) bzw. des Brennstoffzellensystems (1). Der vorgeschlagene Medienspaltmotor (10), beispielsweise für ein Brennstoffzellensystem (1), weist eine Welle (15) auf, in der ein Rotormagnet (22) aufgenommen ist. Außerdem weist der Medienspaltmotor (10) einen Stator mit Statorwicklungen (23) zum elektrischen Antreiben einer Drehung der Welle (15) auf. Der Medienspaltmotor (10) weist darüber hinaus ein Gehäuse (26) auf, das einen zwischen der Welle (15) und dem Stator ausgebildeten Strömungsraum (11) begrenzt. Ferner weist der Medienspaltmotor (10) ein in dem Strömungsraum (11) und auf der Welle angeordnetes Verdichterrad (13) auf.

## Beschreibung

Die vorliegende Anmeldung betrifft einen Medienspaltmotor für ein Brennstoffzellensystem sowie ein Brennstoffzellensystem mit einem Medienspaltmotor. Außerdem betrifft die Anmeldung eine Verwendung des Medienspaltmotors bzw. des Brennstoffzellensystems.

Fahrzeuge, die Brennstoffzellensysteme aufweisen, über die eine elektrische Antriebsleistung bereitgestellt wird, sind bekannt. Typischerweise kommen hierbei Wasserstoff-Sauerstoff-Brennstoffzellen mit Protonenaustauschmembran zum Einsatz. Der Brennstoff ist hierbei Wasserstoff und wird über einen Anodenkreislauf einer Anodenseite der Brennstoffzelle zugeführt. Das Oxidationsmittel ist hierbei Sauerstoff und wird über einen Kathodenkreislauf einer Kathode der Brennstoffzelle zugeführt, wo es zur Energiegewinnung mit dem Brennstoff reagiert. Beispielsweise beschreibt die Druckschrift DE 10 2016 015 266 A1 Stand der Technik verwandter Art, bei dem eine Luftversorgungsvorrichtung mit einem Turbinen- und einem Verdichterrad im Kathodenkreislauf angeordnet ist.

Demgegenüber ist es eine Aufgabe der vorliegenden Anmeldung einen verbesserten Medienspaltmotor und ein verbessertes Brennstoffzellensystem sowie deren Verwendung vorzuschlagen. Insbesondere ist es eine Aufgabe der vorliegenden Anmeldung, einen Medienspaltmotor vorzuschlagen, der eine hohe Effizienz bei besonders kompakter und langlebiger Anordnung gewährleistet und gleichzeitig vergleichsweise einfach herstellbar ist. Darüber hinaus ist es eine Aufgabe der vorliegenden Anmeldung ein entsprechend vorteilhaftes Brennstoffzellensystem und eine entsprechend vorteilhaften Verwendung vorzuschlagen.

Diese Aufgaben werden gelöst durch einen Medienspaltmotor mit den Merkmalen des Anspruchs 1 sowie durch ein Brennstoffzellensystem und eine Verwendung mit den Merkmalen weiterer Ansprüche. Vorteilhafte Weiterbildungen ergeben sich mit den Merkmalen der abhängigen Ansprüche und der Ausführungsbeispiele.

Der vorgeschlagene Medienspaltmotor, beispielsweise für ein Brennstoffzellensystem, weist eine Welle auf, in der ein Rotormagnet aufgenommen ist. Außerdem weist der Medienspaltmotor einen Stator mit Statorwicklungen zum elektrischen Antreiben einer Drehung der Welle auf. Hierfür können die Statorwicklungen und der Rotormagnet zusammenwirken. Der Medienspaltmotor weist darüber hinaus ein Gehäuse auf, das einen zwischen der Welle und dem Stator ausgebildeten Strömungsraum begrenzt. Ferner weist der Medienspaltmotor ein in dem Strömungsraum und auf der Welle angeordnetes Verdichterrad auf.

In vorteilhaften Ausführungen kann der Medienspaltmotor Haltestege aufweisen, die sich im Strömungsraum zur radialen Lagerung der Welle zwischen dem Gehäuse und der Welle erstrecken. Die Haltestege bilden somit in der Regel ein radiales Lager für die Welle oder einen Teil des radialen Lagers für die Welle. Indem die Haltestege vorgesehen sind, die sich im Strömungsraum erstrecken, kann erreicht werden, dass der Medienspaltmotor besonders robust und langlebig ist. Es kann in einigen Ausführungen ein zweites radiales Lager für die Welle vorgesehen sein, das in einigen Ausführungen im Gehäuse des Medienspaltmotors angeordnet sein kann. Durch das Vorsehen der Haltestege im Strömungsraum kann das zweite radiale Lager vergleichsweise platzsparend und weniger aufwendig gestaltet sein. Somit wird durch die Haltestege auch der Vorteil erreicht, dass der Medienspaltmotor bei vergleichsweise einfachem Aufbau besonders robust und dabei kompakt und platzsparend ist.

In einigen Ausführungen sind die Haltestege stromaufwärts vom Verdichterrad angeordnet. Hierdurch kann ein besonders robuster Aufbau erreicht werden. Die Haltestege können die Welle zum Beispiel im Bereich eines insbesondere stromaufwärtsseitigen, axialen Endabschnitts der Welle radial lagern. Beispielsweise kann es vorgesehen sein, dass das Verdichterrad in einem radial verbreiterten Abschnitt des Strömungsraums aufgenommen ist. Die Haltestege können in einigen Ausführungen in einem demgegenüber engeren Abschnitt des Strömungsraums angeordnet sein.

Der Medienspaltmotor weist in einigen Ausführungen ein Turbinenrad auf. Das Turbinenrad kann auf der Welle angeordnet sein. Typischerweise begrenzt das Gehäuse einen weiteren Strömungsraum. Das Turbinenrad kann in dem weiteren Strömungsraum angeordnet sein. Es können zudem weitere Haltestege vorgesehen sein. Die weiteren Haltestege können sich im weiteren Strömungsraum zur radialen Lagerung der Welle zwischen dem Gehäuse und der Welle erstrecken. Die weiteren Haltestege bilden somit in der Regel ein weiteres radiales Lager für die Welle oder einen Teil des weiteren radialen Lagers für die Welle. Hierbei ist die Ausführung mit den Haltestegen und den weiteren Haltestegen besonders von Vorteil, weil sich ein besonders kompakter und stabiler Aufbau ergibt. Durch das Vorsehen der Haltestege und der weiteren Haltestege ergibt sich eine stabile radiale Lagerung der Welle in dem Strömungsraum und in dem weiteren Strömungsraum, sodass ein weiteres radiales Lager in dem Gehäuse bzw. außerhalb des Strömungsraumes in der Regel nicht notwendig ist, wodurch eine geringe Baugröße erreicht werden kann. Der Strömungsraum und der weitere Strömungsraum sind in der Regel voneinander fluidisch getrennt. Hierfür kann eine Fluiddichtung um die Welle in einem Bereich zwischen dem Verdichter- und dem Turbinenrad vorgesehen sein. Ein radiales Lager zwischen dem Verdichter- und dem Turbinenrad kann vorgesehen sein, ist in den meisten Ausführungen im Gegensatz zum Beispiel zum Stand der Technik DE 10 2016 015 266 A1 jedoch nicht unbedingt vonnöten, weil die radiale Lagerung in der Regel hinreichend durch die Haltestege und die weiteren Haltestege in den jeweiligen Strömungsräumen bewerkstelligt wird. Somit ist kein zusätzlicher Bauraum für aufwendige Lagertechnik nötig.

Es ist in einigen Ausführungen vorgesehen, dass das Verdichterrad und das Turbinenrad zwischen den Haltestegen und den weiteren Haltestegen angeordnet sind. Hierdurch kann eine besonders robuste Lagerung und hohe Steifigkeit durch die Haltestege und die weiteren Haltestege erreicht werden. Die Haltestege und die weiteren Haltestege können hierbei jeweils an einem von zwei an gegenüberliegenden Enden der Welle angeordneten Abschnitten der Welle angreifen.

Durch Vorsehen des Turbinenrads kann ein Teil der Energie des durch den weiteren Strömungsraum ausströmenden Mediums genutzt werden, um das Verdichterrad anzutreiben. Ein Antrieb des Verdichterrads kann durch die Statorwicklungen und den Rotormagneten des Medienspaltmotors erfolgen oder durch diese unterstützt werden. Insbesondere kann es vorteilhaft sein, dass durch den Medienspaltmotor ein Anlauf des Verdichterrads elektrisch bewerkstelligt wird, damit die Effizienz des Medienspaltmotors erhöht wird. Bei der Ausführung mit Turbinenrad kann der Strömungsraum einen Teil eines Ansaugsystems und der weitere Strömungsraum einen Teil eines Ausströmsystems ausbilden. Durch den Antrieb des Turbinenrads im Ausströmsystem kann ein Mediendruck im Ansaugsystem erhöht werden, sodass der Medienspaltmotor mehr Medium bereitstellen kann und die Effizienz erhöht wird. Im Falle einer Anwendung des Medienspaltmotors für ein Brennstoffzellensystem kann auf diese Weise beispielsweise ein Wasserstoffdruck in einer Wasserstoffzufuhrleitung für eine Brennstoffzelle in effizienter Weise erhöht werden.

Der Rotormagnet ist typischerweise in einem Abschnitt der Welle aufgenommen, der in dem Strömungsraum angeordnet ist. Es kann auch ein weiterer Rotormagnet vorgesehen sein, der in einem anderen Abschnitt der Welle aufgenommen ist und der beispielsweise in einem Abschnitt der Welle aufgenommen ist, der in dem weiteren Strömungsraum angeordnet ist. Es kann aber in einigen Ausführungsvarianten vorgesehen sein, dass der Rotormagnet in einem Abschnitt der Welle aufgenommen ist, der in dem weiteren Strömungsraum oder außerhalb des Strömungsraums angeordnet ist. Bei der Ausführung mit dem weiteren Rotormagnet, der in dem Abschnitt der Welle aufgenommen ist, der in dem weiteren Strömungsraum angeordnet ist, können weitere Statorwicklungen vorgesehen sein, die eingerichtet sind zum elektrischen Antreiben einer Drehung der Welle mit dem weiteren Rotormagnet zusammenzuwirken. Diese Ausführung ist besonders ausbalanciert und erlaubt eine robuste Anordnung, bei der die resultierende Drehung der Welle durch gezielten Stromfluss in den ersten Statorwicklungen und in den zweiten Statorwicklungen und somit durch Wirkung auf verschiedene axiale Abschnitte der Welle angetrieben wird.

In einigen Ausführungen sind die Haltestege zur Erzeugung eines Dralls in einem im Strömungsraum geförderten Medium eingerichtet. Auf diese Weise können die Haltestege beispielsweise ein vom Verdichterrad stromaufwärts gelegenes Vorlaufgitter und/oder ein stromabwärts gelegenes Nachlaufgitter zur Erzeugung des Dralls in dem geförderten Medium bilden. Zu diesem Zweck kann es vorgesehen sein, dass die Haltestege oder zumindest einige der Haltestege zur Erzeugung des Dralls angestellt sind. Beispielsweise verlaufen die Haltestege so in einem Winkel zur axialen Richtung, dass durch Anströmen der Haltestege ein Drall in dem geförderten Medium erzeugt wird. Auf diese Weise kann durch die Haltestege eine Optimierung der Strömungseigenschaften erreicht werden. Hierbei werden Flügel des Verdichterrads im Vergleich zu nicht angestellten Haltestegen anders angeströmt, wodurch eine höhere Effizienz des Medienspaltmotors erreicht werden kann. Den Haltestegen kommt hierbei somit die Funktion zu, auch der Drallerzeugung im Medium zu dienen. Die Haltestege sind in der Regel so im Strömungsraum aufgenommen, dass die Haltestege von einem stromaufwärtsliegenden Ende der Haltestege zu einem stromabwärtsliegenden Ende der Haltestege von dem Medium durchströmt werden. Der Strömungsraum kann zumindest teilweise oder auch vollständig durch einen insbesondere im Wesentlichen hohlzylindrischen Spalt zwischen der Welle und dem Gehäuse ausgebildet sein. Die Haltestege können gleichmäßig bzw. regelmäßig über einen Umfang verteilt angeordnet sein. In typischen Ausführungen weist der Medienspaltmotor im Strömungsraum entlang der Umfangsrichtung zumindest zwei oder zumindest drei und/oder höchstens 24 Haltestege auf. Zwischen benachbarten Haltestegen sind in der Regel Zwischenräume ausgebildet, durch die das gesamte geförderte Medium oder durch die zumindest ein Teil des geförderten Mediums strömt. In typischen Ausführungen sind die Haltestege in axialer Richtung langgestreckt und erstrecken sich in axialer Richtung. Zudem erstrecken sich die Haltestege in typischen Ausführungen zwischen der Welle und dem Gehäuse in im Wesentlichen radialer Richtung. In den von dem Medium durchströmten Zwischenräumen sind in der Regel keine Spulen oder Wicklungen des Stators und insbesondere keinerlei feste Gegenstände angeordnet. Die Zwischenräume sind typischerweise beidseitig in Umfangsrichtung von den Haltestegen begrenzt. In einem radial äußeren Bereich sind die Zwischenräume in der Regel durch einen Innenwand des Gehäuses begrenzt. Eine Ausdehnung der vom Medium durchströmten Zwischenräume beträgt in radialer Richtung in der Regel zumindest einem Viertel, insbesondere zumindest der Hälfte, und/oder höchstens einem Achtfachen, insbesondere höchstens einem Vierfachen, eines Außendurchmessers der Welle in einem axialen Bereich, in dem die Haltestege angeordnet sind. Es kann vorgesehen sein, dass die Statorwicklungen jenseits einer radialen Abdichtung des Strömungsraumes angeordnet sind, wodurch sowohl der Magnetfluss als auch die Strömungseigenschaften optimiert werden können.

Es kann beispielsweise vorgesehen sein, dass die Haltestege und/oder ein mit den Haltestegen verbundener Lagerteil ein radiales Luftlager für die Welle bilden. Es kann aber auch vorgesehen sein, dass die Haltestege und/oder das verbundene Lagerteil ein die Welle berührendes radiales Lager bilden. Das Lagerteil kann zwei oder mehrere Haltestege miteinander verbinden. Das Lagerteil wird typischerweise durch die Haltestege gehalten. Das Lagerteil kann beispielsweise eine Hülse, insbesondere eine zylindrische Hülse sein. Die Hülse kann die Welle, insbesondere vollumfänglich, umgreifen. Es kann vorgesehen sein, dass die Hülse mit radial innenliegenden Abschnitten der Haltestege verbunden ist. Es kann zudem in einigen Ausführungen vorgesehen sein, dass die Zwischenräume in einem radial innenliegenden Bereich durch die Hülse begrenzt sind.

In einigen Ausführungen weist der Medienspaltmotor einen Abschnitt zur axialen Lagerung der Welle auf. Der Abschnitt kann als Teil der Haltestege ausgeführt oder mit den Haltestegen verbunden sein. Insbesondere kann der Abschnitt in einem radial innenliegenden Bereich der Haltestege als Teil der Haltestege ausgeführt oder mit den Haltestegen verbunden sein. Der Abschnitt kann beispielsweise als Teil der oben beschriebenen Hülse ausgebildet sein. Der Abschnitt kann beispielsweise einen Vorsprung aufweisen, der die Welle zur axialen Lagerung umgreift oder der zur axialen Lagerung in die Welle eingreift. Insbesondere kann es vorgesehen sein, dass der Abschnitt einen axialen Endabschnitt der Welle bereichsweise umgreift. Es kann auch vorgesehen sein, dass der Abschnitt zur Lagerung an einer Stufe der Welle angreift, beispielsweise an einer Fläche, die ein Flächennormal in axialer Richtung aufweist. Der Abschnitt ist in der Regel mit zumindest einem der Haltestege verbunden. Den Haltestegen kann hierbei somit auch die Funktion zukommen, zur axialen Lagerung der Welle beizutragen.

Wie erwähnt, ist der Rotormagnet typischerweise in einem Abschnitt der Welle aufgenommen, der in dem Strömungsraum angeordnet ist. Der Rotormagnet kann in typischen Ausführungen stromaufwärts des Verdichterrads angeordnet sein, insbesondere in dem engeren Abschnitt des Strömungsraums. Es kann des Weiteren vorgesehen sein, dass die Haltestege so angeordnet sind, dass die Haltestege einen axialen Überlapp mit dem Rotormagneten und/oder mit den Statorwicklungen aufweisen. Auf diese Weise kann eine kompakte Bauform mit vergleichsweise geringer axialer Länge erreicht werden. Außerdem kann auf diese Weise durch die Haltestege gleichzeitig eine effiziente Kühlung des Stators über den Medienstrom erreicht werden, weil durch ein vergrößerter Wandkontakt für das Medium im Bereich des Rotormagneten und/oder der Statorwicklungen erreicht wird. In besonders bevorzugten Ausführungen bilden die Haltestege zur Optimierung eines Magnetflusses einen Aktivteil eines durch Rotormagnet und Statorwicklungen gebildeten magnetischen Kreises. Es kann beispielsweise vorgesehen sein, dass die Haltestege gewissermaßen Statorzähne im Strömungsraum fortsetzen und damit den Magnetfluss auf besonders vorteilhafte Weise verbessern. Das Magnetfeld kann hierbei von den Statorwicklungen, die außerhalb des Strömungsraumes angeordnet sein können, die Haltestege in radialer Richtung durch den Strömungsraum und an den Rotor herangeführt werden. Die Haltestege können zu diesem Zweck magnetisch leitfähige Eigenschaften aufweisen. Beispielsweise können die Haltestege Statorbleche aufweisen. Der Stator kann ebenfalls Statorbleche aufweisen. Es kann vorgesehen sein, dass die Haltestege die Statorbleche in den Strömungsraum hinein fortsetzen. Die Statorbleche der Haltestege und des Stators können als einstückiges, d.h. insbesondere bezüglich der Einzelbleche durchgängiges, Statorblechpaket mit Einzelblechen ausgebildet sein. Somit können die Haltestege neben der Funktion zur Lagerung der Welle auch zur Verbesserung des Magnetflusses beitragen. Die Haltestege können hierbei der Fokussierung der Magnetflusslinien vom Stator hin zum Rotormagnet dienen und die Streuverluste verringern.

Eine geeignete Länge der Haltestege in axialer Richtung beträgt in der Regel zumindest 5 mm und/oder höchstens 150 mm, insbesondere höchstens 100 mm. Eine radiale Erstreckung der Haltestege im Strömungskanal beträgt in der Regel mindestens 5 mm und/oder höchstens 250 mm, insbesondere höchstens 150 mm. Eine Breite der Haltestege in Umfangsrichtung kann zumindest 0,5 mm und/oder höchstens 10 mm, insbesondere höchstens 5 mm, betragen. Die Haltestege weisen neben den gegebenenfalls vorhandenen Statorblechen in der Regel nicht magnetisch leitfähige Werkstoffe, beispielsweise einen Kunststoff oder eine Al-Legierung, auf. Als Befestigungsarten für die Haltestege können eine Einsteckhülse, eine Klebe-/Schweißverbindung, ein Verstemmen, und/oder ein im Statorgehäuse integriertes Spritzgussbauteil vorgesehen sein.

In einigen Ausführungen ist ein Medienspaltmotor vorgesehen, bei dem die Welle eine einstückige Armierung ausweist. Die Armierung kann einen ersten Abschnitt und einen zweiten Abschnitt aufweisen. Im Inneren des ersten Abschnitts der Armierung kann der Rotormagnet aufgenommen sein. Ferner kann auf dem zweiten Abschnitt der Armierung das Verdichterrad an-geordnet sein. Die ersten und zweiten Abschnitte der Armierung sind können direkt aneinander angrenzend oder axial voneinander beabstandet sein. Das Verdichterrad kann beispielsweise auf den zweiten Abschnitt der Armierung aufgepresst sein. Die Armierung ist in der Regel zur Aufnahme des Rotormagneten zumindest abschnittsweise im Inneren hohl. Die Welle kann zudem einen Wellenstab aufweisen, der in einem Hohlraum im Inneren der Armierung aufgenommen ist. Der Rotormagnet kann zudem an dem Wellenstab befestigt sein. Es kann vorgesehen sein, dass die Welle oder die Armierung in ihrem Inneren einen durchgehenden, d.h. insbesondere einen sich über die gesamte axiale Länge der Welle bzw. der Armierung erstreckenden, Hohlraum aufweist. Die Welle kann somit in einigen Ausführungen als Hohlwelle ausgeführt sein. In dem durchgehenden Hohlraum können der Rotormagnet und der Wellenstab aufgenommen sein. Es kann insbesondere vorgesehen sein, dass der durchgehende Hohlraum der Welle oder der Armierung zumindest in einem Bereich vom Verdichterrad bis zum gegebenenfalls vorgesehenen Turbinenrad erstreckt. Die Verwendung der beschriebenen Armierung bringt fertigungstechnische Vorteile mit sich, bei denen sich steife Anordnungen mit besonders gutem Biegeverhalten und geringer Unwucht ergeben, die sich insbesondere für den Betrieb bei hohen Drehzahlen eignen. Die Armierung ist in der Regel aus einem nicht-magnetischen Material gefertigt. Durch die einstückige Ausführung der Armierung, d.h. insbesondere die Ausführung der Armierung als aus einem durchgehenden Stück mit gleichen Materialeigenschaften gefertigtes Bauteil und/oder nicht gefügtes Bauteil, werden die besonderen Vorteile hinsichtlich der verbesserten Abstützung des Verdichterrads im Zusammenspiel mit dem Rotormagneten erreicht. Beispielsweise kann die Armierung aus Stahl, insbesondere Chromstahl, gefertigt sein. Das Verdichterrad kann beispielsweise aus Aluminium gefertigt sein.

In einigen Ausführungen ist es vorgesehen, dass der erste Abschnitt der Armierung einen größeren Außendurchmesser aufweist als der zweite Abschnitt der Armierung. Somit kann der Rotormagnet in dem Abschnitt der Armierung mit größerem Durchmesser angeordnet sein. Auf diese Weise ergibt sich eine verbesserte Stabilität bei vorteilhafter Strömungseffizienz und verbesserter magnetischer Effizienz. Insbesondere kann zu diesem Zweck vorgesehen sein, dass der Rotormagnet und das Verdichterrad eine radialen Überlapp aufweisen, beispielsweise so dass ein Teil des Verdichterrads und ein Teil des Rotormagnets an der gleichen radialen Position, jedoch an unterschiedlichen axialen Positionen angeordnet sind.

In besonders vorteilhaften Ausführungen schließt der zweite Abschnitt der Armierung mit einer Stufe ab. An der Stufe kann das Verdichterrad anliegen. Die Stufe kann den zweiten Abschnitt der Armierung begrenzen, insbesondere in Richtung des ersten Abschnitts. Die Stufe ist in der Regel derart ausgebildete, dass ein Außendurchmesser, der im zweiten Abschnitt geringer ist, vom zweiten Abschnitt aus betrachtet jenseits der Stufe zunimmt. Typischerweise stützt sich das Verdichterrad an der Stufe ab. Hierdurch können in vorteilhafter Weise Kräfte abgefangen werden, die sich aus einer Taumelbewegung der Welle oder der Armierung ergeben. Somit kann die Steifigkeit der Welle auf diese Weise zusätzlich erhöht werden.

Die Armierung ist besonders vorteilhaft in Kombination mit den Haltestegen zur radialen Lagerung der Welle, da sich hierdurch eine besonders stabile Konstruktion ergibt, insbesondere wenn die Haltestege oder damit verbundene Lagerteile die Welle im Bereich der Armierung radial lagern. Die Armierung ist jedoch bereits für sich genommen vorteilhaft, auch wenn keine Haltestege vorgesehen sind. Beispielsweise kann sich die vorgeschlagene Anmeldung beziehen auf einen Medienspaltmotor, beispielsweise für ein Brennstoffzellensystem, der die Welle, in der der Rotormagnet aufgenommen ist, den Stator mit Statorwicklungen zum elektrischen Antreiben der Drehung der Welle, das Gehäuse, das einen zwischen der Welle und dem Stator ausgebildeten Strömungsraum begrenzt, das in dem Strömungsraum und auf der Welle angeordnete Verdichterrad sowie die einstückige Armierung aufweist. Der Medienspaltmotor kann zusätzlich die oben oder unten beschriebenen vorteilhaften Merkmale aufweisen.

Es kann vorgesehen sein, dass der Medienspaltmotor einen Tropfenabscheider aufweist. Der Tropfenabscheider kann im Strömungsraum am Gehäuse oder in anderen Ausführungen im weiteren Strömungsraum angeordnet sein. Der Tropfenabscheider kann beispielsweise ein Wasserabscheider sein. Durch den Tropfenabscheider kann beispielsweise flüssiges Wasser aus dem Medienstrom abgeschieden werden. Der Tropfenabscheider kann an einer Innenwand des Gehäuses, die den Strömungsraum oder den weiteren Strömungsraum begrenzt, angeordnet sein oder als Teil der Innenwand ausgebildet sein. In vorteilhaften Ausführungen ist der Tropfenabscheider an einem Übergang zu einem Abschnitt des Strömungsraums oder weiteren Strömungsraums, insbesondere zu dem verbreiterten Abschnitt des Strömungsraums, der das Verdichterrad bzw. das Turbinenrad aufnimmt, angeordnet. Der Tropfenabscheider ist in der Regel in axialer Richtung zwischen den gegebenenfalls vorgesehenen Haltestegen und dem Verdichterrad und/oder zwischen dem Rotormagneten und dem Verdichterrad angeordnet. Der Tropfenabscheider kann auch in axialer Richtung zwischen den gegebenenfalls vorgesehenen weiteren Haltestegen und dem Turbinenrad und/oder zwischen dem weiteren Rotormagneten und dem Turbinenrad angeordnet sein. Der Tropfenabscheider weist in der Regel einen axialen Überlapp mit der Welle auf. Durch die beschriebene Integration des Tropfenabscheiders im Medienspaltmotor kann eine besonders kompakte Anordnung erreicht werden, insbesondere so, dass kein weiterer Tropfenabscheider vonnöten ist. Hierbei kann beispielsweise auf besonders kompakte und effiziente Weise eine Abscheidung von flüssigem Wasser aus einem Kanal zum Führen eines Brennstoffs oder eines Oxidationsmittels, beispielsweise aus einer Rezirkulationsleitung, des Brennstoffzellensystems erreicht werden. Beispielsweise kann der Tropfenabscheider als Rinne und/oder als Ringkanal ausgebildet sein, in der bzw. dem sich im Betrieb Tropfen sammeln. Der Tropfenabscheider kann mit einer Ablassleitung fluidisch verbunden sein, sodass die Tropfen über die Ablassleitung abgelassen werden können.

Der Tropfenabscheider ist besonders vorteilhaft in Kombination mit den Haltestegen zur radialen Lagerung der Welle, insbesondere dann, wenn die Haltestege zur Erzeugung des Dralls in einem gefördertem geförderten Medium eingerichtet sind, da auf diese Weise ein für die Tropfenabscheidung optimierter Strömungsverlauf einstellbar ist. Der Tropfenabscheider ist jedoch bereits für sich genommen vorteilhaft, auch wenn keine Haltestege vorgesehen sind. Beispielsweise kann sich die vorgeschlagene Anmeldung beziehen auf einen Medienspaltmotor, beispielsweise für ein Brennstoffzellensystem, der die Welle, in der der Rotormagnet aufgenommen ist, den Stator mit Statorwicklungen zum elektrischen Antreiben der Drehung der Welle, das Gehäuse, das einen zwischen der Welle und dem Stator ausgebildeten Strömungsraum begrenzt, das in dem Strömungsraum und auf der Welle angeordnete Verdichterrad sowie den im Strömungsraum am Gehäuse angeordneten Tropfenabscheider aufweist. Der Medienspaltmotor kann zusätzlich die oben oder unten beschriebenen vorteilhaften Merkmale aufweisen.

Die Anmeldung kann ferner gerichtet sein auf ein Brennstoffzellensystem, umfassend einen wie oben oder unten beschriebenen Medienspaltmotor. Das Brennstoffzellensystem kann des Weiteren einen Kanal zum Führen eines Brennstoffs aufweisen. Der Strömungsraum kann einen Teil des Kanals zum Führen des Brennstoffs bilden. Der Kanal kann zur Rezirkulation des Brennstoffs, beispielsweise Wasserstoff, von und zu der Brennstoffzelle eingerichtet sein. Das Verdichterrad kann in dem Kanal zum Führen des Brennstoffs angeordnet sein. Auf diese Weise kann der Medienspaltmotor zur Brennstoffversorgung der Brennstoffzelle dienen. Hierdurch kann die Brennstoffversorgung bzw. der Rezirkulationskreislauf über den insbesondere langlebigen Medienspaltmotor präzise lastabhängig gesteuert werden, wodurch ein geringerer Wasserstoffverbrauch erreicht werden kann. Das Brennstoffzellensystem kann Brennstoffzelle und den wie oben oder unten beschriebenen Medienspaltmotor und gegebenenfalls den Kanal zum Führen des Brennstoffs aufweisen. In einigen Ausführungen ist das Brennstoffzellensystem als Teil eines Kraftfahrzeugs ausgebildet. Die Anmeldung ist ferner gerichtet auf eine Verwendung eines wie oben oder unten beschriebenen Medienspaltmotors oder eines wie oben oder unten beschriebenen Brennstoffzellensystem zur Bereitstellung von elektrischer Antriebsleistung in einem Fahrzeug.

Während der Medienspaltmotor und das Brennstoffzellensystem in den Ausführungen mit den beschriebenen Haltestegen besonders vorteilhaft sind, kann die Anmeldung auch gerichtet werden auf ein Brennstoffzellensystem, das nicht notwendigerweise die oben oder unten beschriebenen Haltestege, jedoch den Medienspaltmotor mit der Welle, in der der Rotormagnet aufgenommen ist, dem Stator mit den Statorwicklungen zum elektrischen Antreiben der Drehung der Welle, und das Gehäuse, das den zwischen der Welle und dem Stator ausgebildeten Strömungsraum begrenzt, und das in dem Strömungsraum und auf der Welle angeordnete Verdichterrad aufweist. Das Brennstoffzellensystem kann zusätzlich jedes der oben oder unten beschriebenen vorteilhaften Merkmale aufweisen.

Das Brennstoffzellensystem kann einen Kanal zum Führen eines Oxidationsmittels, insbesondere Sauerstoff, aufweisen. Der Kanal kann eine Oxidationsmittelzufuhrleitung zum Zuführen von Oxidationsmittel zur Brennstoffzelle aufweisen. Der Kanal kann des Weiteren eine Abfuhrleitung zum Abführen von Oxidationsmittel und/oder eines Reaktionsproduktes, insbesondere Wasser, von der Brennstoffzelle aufweisen. Der Strömungsraum, in dem das Verdichterrad angeordnet ist, kann einen Teil des Kanals zum Führen des Oxidationsmittels bilden. Das Verdichterrad kann in dem Kanal zum Führen des Oxidationsmittels angeordnet sein. Insbesondere kann der Strömungsraum, in dem das Verdichterrad angeordnet ist, einen Teil der Oxidationsmittelzufuhrleitung bilden. Der weitere Strömungsraum, in dem das Turbinenrad angeordnet ist, kann einen Teil der Abfuhrleitung bilden.

Die Anmeldung bezieht sich in besonders vorteilhafter Weise auf einen Medienspaltmotor für Brennstoffzellenanwendungen bzw. für ein Brennstoffzellensystem, kann sich aber auch allgemein auf einen Medienspaltmotor beziehen, der die oben oder unten beschriebenen vorteilhaften Merkmale aufweist. Beispielsweise kann sich die vorliegende Anmeldung auf einen Medienspaltmotor beziehen. Dieser Medienspaltmotor kann den beschriebenen Stator, den beschriebenen Rotor und das beschriebene Verdichterrad aufweisen. Dieser Medienspaltmotor kann darüber hinaus weitere der oben oder unten beschriebenen vorteilhaften Merkmale enthalten. Beispielsweise kann der Medienspaltmotor ein Medienspaltmotor für einen Turbolader sein.

Oben oder unten in Bezug auf den Medienspaltmotor genannte Merkmale sind entsprechend auf das Rezirkulationsgebläse und deren Verwendung sowie auf das Brennstoffzellensystem übertragbar und umgekehrt.

Ausführungsbeispiele werden nachfolgend anhand der Abbildungen beschrieben. Es zeigen
- Fig. 1: eine schematische Ansicht eines Brennstoffzellensystems mit einem Medienspaltmotor,
- Fig. 2: eine schematische Ansicht des Medienspaltmotors,
- Fig. 3: eine schematische Ansicht des Medienspaltmotors gemäß einer weiteren Ausführung,
- Fig. 4: eine schematische Ansicht des Medienspaltmotors,
- Fig. 5: eine schematische Ansicht des Medienspaltmotors gemäß einer weiteren Ausführung,
- Fig. 6: eine schematische Ansicht des Medienspaltmotors gemäß einer weiteren Ausführung und
- Fig. 7: eine Schnittdarstellung einer Welle des Medienspaltmotors.

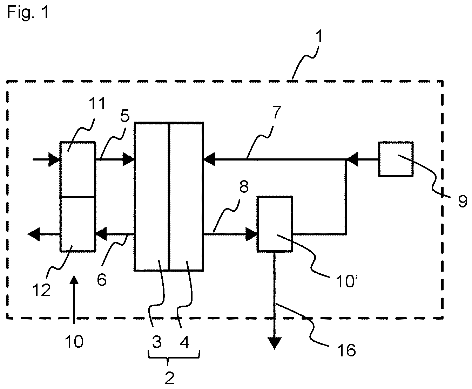

Figur 1 zeigt eine schematische Ansicht eines Brennstoffzellensystems 1. Das Brennstoffzellensystem 1 ist in einem Fahrzeug verbaut und dient der Bereitstellung von elektrischer Antriebsleistung für das Fahrzeug. Das Brennstoffzellensystem 1 weist eine Brennstoffzelle 2, beispielsweise eine Wasserstoff-Sauerstoff-Brennstoffzelle, mit einer Kathodenseite 3 und einer Anodenseite 4 auf. Mit der Kathodenseite 3 ist ein Kathodenkreislauf verbunden, über den die Brennstoffzelle 2 beispielsweise mit Sauerstoff als Oxidationsmittel versorgt wird. Zu diesem Zweck weist der Kathodenkreislauf eine Oxidationsmittelzufuhrleitung 5, insbesondere einer Zuluftleitung, über die der Brennstoffzelle 2 das Oxidationsmittel, beispielsweise als Bestandteil von Luft, zugeführt wird, und eine Abfuhrleitung 6, insbesondere eine Abluftleitung, auf, über die Abluft und gegebenenfalls ein Reaktionsprodukt wie Wasser abgeführt werden.

Die Anodenseite 4 der Brennstoffzelle 2 ist mit einem Kanal verbunden, der eine Brennstoffzufuhrleitung 7 und eine Brennstoffabfuhrleitung 8 aufweist. Der Kanal ist mit einer Brennstoffquelle 9, beispielsweise einem Druckgasspeicher für den Brennstoff, insbesondere Wasserstoff, verbunden. Über die Brennstoffzufuhrleitung 7 wird der Anodenseite 4 der Brennstoffzelle 2 ein Brennstoff zugeführt. Restbrennstoff, der nicht in der Brennstoffzelle 2 verbraucht wurde, kann über die Brennstoffabfuhrleitung 8 wieder von der Brennstoffzelle 2 abgeführt werden. Der nicht verbrauchte Brennstoff kann anschließend, gegebenenfalls vermengt mit weiterem Brennstoff aus der Brennstoffquelle 9, erneut der Brennstoffzufuhrleitung 7 und der Anodenseite 4 der Brennstoffzelle 2 zugeführt werden.

Das Brennstoffzellensystem 1 umfasst einen Medienspaltmotor 10 mit einem Strömungsraum 11 und einem weiteren Strömungsraum 12, die in der Abbildung schematisch gezeigt sind und die einen Teil der Oxidationsmittelzufuhrleitung 5 bzw. der Abfuhrleitung 6 bilden. Wie unten genauer erläutert ist, ist in dem Strömungsraum 11 ein Verdichterrad 13 und in dem weiteren Strömungsraum 12 ein Turbinenrad 14 aufgenommen. Das Verdichterrad 13 und das Turbinenrad 14 sind hierbei zur Effizienzsteigerung im Kathodenkreislauf miteinander über eine gemeinsame Welle 15 gekoppelt.

Das Brennstoffzellensystem 1 umfasst außerdem einen weiteren Medienspaltmotor 10' im Anodenkreislauf, d.h. in dem Kanal zum Führen des Brennstoffs bzw. als Teil des Rezirkulationsgebläses, genauer in der Brennstoffabfuhrleitung 8. Der weitere Medienspaltmotor 10' weist ein unten oder oben näher beschriebenes Verdichterrad zum Fördern von Brennstoff auf, das in einem Strömungsraum des weiteren Medienspaltmotors 10' angeordnet ist. Mit dem weiteren Medienspaltmotor 10' ist zudem eine Ablassleitung 16 verbunden, über die im Rezirkulationskreislauf abgeschiedenes Wasser abgelassen werden kann. Die Ablassleitung 16 ist zu diesem Zweck mit einem unten näher beschriebenen Tropfenabscheider 32 verbunden, der im Strömungsraum des weiteren Medienspaltmotors 10' angeordnet sein kann.

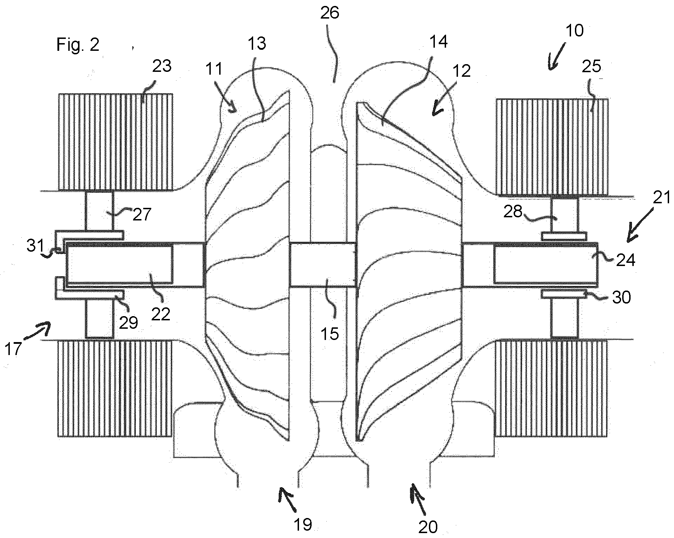

Figur 2 zeigt eine schematische Ansicht des Medienspaltmotors 10. Wiederkehrende Merkmale sind in dieser und in den folgenden Abbildungen mit den gleichen Bezugszeichen versehen. Der Medienspaltmotor 10 weist den Strömungsraum 11 und den weiteren Strömungsraum 12 auf, die durch ein gemeinsames Gehäuse 26 begrenzt werden. In dem Strömungsraum 11 ist das Verdichterrad 13 angeordnet. Der Strömungsraum 11 weist einen Oxidationsmitteleinlass 17 auf, über den Luft in den Strömungsraum 11 eintritt. Anschließend wird die Luft durch das Verdichterrad 13 verdichtet, ehe die Luft durch einen Oxidationsmittelauslass 19 aus dem Strömungsraum 11 austritt und der Kathodenseite 3 der Brennstoffzelle 2 zugeführt wird. Nicht verbrauchtes Oxidationsmittel und gegebenenfalls Reaktionsprodukte gelangen anschließend über einen Ablufteinlass 20 in den weiteren Strömungsraum 12 und treiben dort das Turbinenrad 14 an, ehe das Medium über einen Auslass 21 des weiteren Strömungsraums 12 wieder aus dem weiteren Strömungsraum 12 austritt.

Das Verdichterrad 13 und das Turbinenrad 14 sind auf der Welle 15 aufgenommen und dadurch drehfest miteinander verbunden. Die Welle 15 ist als Hohlwelle ausgeführt und weist in einem Endabschnitt, der im Strömungsraum 11 angeordnet ist, im Inneren einen Rotormagneten 22 auf, der durch Erzeugung eines Stromflusses in Statorwicklungen 23 eines Stators mit Statorblechen antreibbar ist. Entsprechend ist in einem weiteren Endabschnitt der Welle 15 innerhalb des weiteren Strömungsraums 12 ein weiterer Rotormagnet 24 aufgenommen, der durch Erzeugung eines Stromflusses in weiteren Statorwicklungen 25 eines Stators mit Statorblechen antreibbar ist. Auf diese Weise kann die Aufladung durch einen ausgewogenen elektrischen Antrieb der Drehung der Welle 15 verbessert werden, sodass eine effiziente Brennstoffversorgung der Brennstoffzelle 2 erreicht wird.

Die Welle 15 ist in beiden gegenüberliegenden Endbereichen im Medienspalt radial gelagert. Zu diesem Zweck weist der Medienspaltmotor 10 Haltestege 27 auf, die sich in einem Bereich des Strömungsraumes 11, der zwischen den Statorwicklungen 23 und dem den Rotormagneten 22 liegt, zwischen Gehäuse 26 und Welle 15 erstrecken. Entsprechend weist der Medienspaltmotor 10 weitere Haltestege 28 auf, die sich in einem Bereich des weiteren Strömungsraumes 12, der zwischen den weiteren Statorwicklungen 25 und dem weiteren Rotormagneten 24 liegt, zwischen Gehäuse 26 und Welle 15 erstrecken. In einigen Ausführungen sind die Haltestege 27 und/oder weiteren Haltestege 28 an ihrem radial innenliegenden Ende mit einer zugehörigen zylindrischen Hülse 29, 30 verbunden, durch die im Zusammenwirken mit den Haltestegen 27 bzw. weiteren Haltestegen 28 eine berührende radiale Lagerung oder eine radiale Luftlagerung der Welle 15 erreicht wird. Zwischen dem Verdichterrad 13 und dem Turbinenrad 14 bildet das Gehäuse 26 eine fluiddichte Abdichtung der Strömungsräume 11, 12 um die Welle 15 aus. Eine stabile radiale Lagerung der Welle 15 ist an dieser Stelle in der Regel aufgrund der radialen Lagerung durch die Haltestege 27, 28 nicht vonnöten. Die zylindrische Hülse 29 weist zudem einen Abschnitt 31 zur axialen Lagerung der Welle 15 auf, der ein axiales Ende der Welle 15 umgreift.

Die Haltestege 27 und weiteren Haltestege 28 können in einigen Ausführungen Statorbleche aufweisen, die Teile der Statorbleche des zugehörigen Stators bilden und diese in den zugehörigen Strömungsraum 11, 12 hinein verlängern, sodass das von den zugehörigen Statorwicklungen 23, 25 erzeugte Magnetfeld zum Antrieb der Welle 15 näher an den zugehörigen Rotormagneten 22, 24 herangeführt wird.

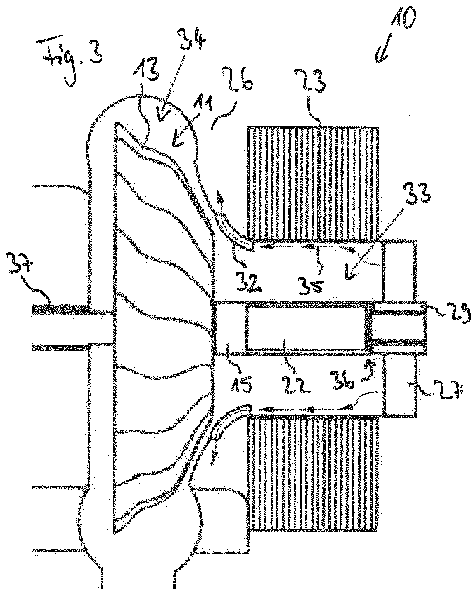

Figur 3 zeigt eine schematische Ansicht eines Medienspaltmotors 10 gemäß einer weiteren Ausführung, bei dem es sich um den in Fig. 1 gezeigten weiteren Medienspaltmotor 10' handeln kann. Der Medienspaltmotor 10 entspricht im Wesentlichen dem zuvor beschriebenen Medienspaltmotor 10, weist jedoch einen Tropfenabscheider 32 auf, der auch bei dem zuvor mit Bezug zu Fig. 2 beschriebenen Medienspaltmotor 10 entsprechend vorgesehen sein kann, insbesondere im Strömungsraum 11 und/oder im weiteren Strömungsraum 12, bevorzugt jedoch im Zusammenhang mit dem wie in Fig. 1 gezeigt im Anodenkreislauf angeordneten weiteren Medienspaltmotor 10' und dessen Strömungsraum 11 eingesetzt wird. Der Tropfenabscheider 32 umfasst eine umlaufende Rinne, die an einer in einem in axialer Richtung zwischen den Statorwicklungen 23 und dem Verdichterrad 13 gelegenen Bereich an der Innenwand des Gehäuses 26 ausgebildet ist und in der im Medienstrom gegebenenfalls vorhandene Tropfen, insbesondere Wassertropfen, abgeschieden werden. Damit ist der Tropfenabscheider 32 an einem Übergang zu einem gegenüber einem engeren Abschnitt 33 des Strömungsraums 11, der die Haltestege 27 aufnimmt, verbreiterten Abschnitt 34 des Strömungsraums 11, der das Verdichterrad 13 aufnimmt, angeordnet. Die Tropfen können entlang des Weges, der durch die Pfeile, von denen einer mit dem Bezugszeichen 35 gekennzeichnet ist, illustriert ist, aus dem Medienstrom zur Innenwand des Gehäuses 26 strömen. Der Tropfenabscheider 32 ist verbunden mit der Ablassleitung 16, sodass die Tropfen anschließend aus dem Strömungsraum 11 abgelassen werden können. In einigen Ausführungen sind die Haltestege 27 angestellt (was in der gezeigten schematischen Ansicht nicht dargestellt ist), sodass die Haltestege 27 in Strömungsrichtung gekrümmt verlaufen. Auf diese Weise kann ein Drall in dem Medienstrom erzeugt werden, durch den ein Auftreffwinkel auf das Verdichterrad 13 sowie ein Weg der Tropfen zum Tropfenabscheider 32 optimiert wird.

In dem in Fig. 3 gezeigten Ausführungsbeispiel dient die zylindrische Hülse 29 am radial innenliegenden Ende der Haltestege 27 zugleich der axialen Lagerung der Welle 15, indem diese an einer Stufe 36 der Welle 15 angreift. Zudem kann ein Teil des Gehäuses 26 ein weiteres radiales Lager 37 der Welle 15 ausbilden.

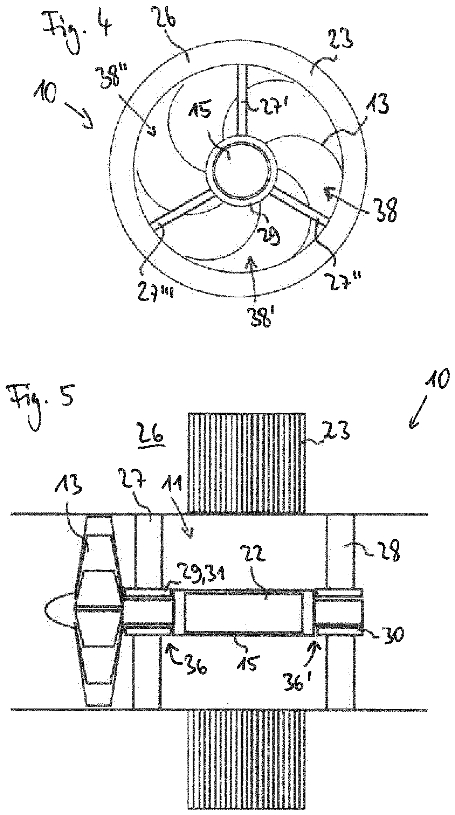

Eine weitere schematische Ansicht des Medienspaltmotors 10 ist in Fig. 4 gezeigt, die die Medienspaltmotoren 10, 10', die mit Bezug zu jeder der oben beschriebenen Abbildungen beschrieben sind, bei einer Blickrichtung in axialer Richtung illustriert. Schaufeln des stromabwärts liegenden Verdichterrads 13 sind schematisch gezeigt. Stromaufwärts vom Verdichterrad 13 sind die Haltestege 27 angeordnet, die im Zusammenwirken mit der zylindrischen Hülse 29 die Welle 15 radial lagern. Die Haltestege 27 werden in dem gezeigten Beispiel gebildet durch drei einzelne Stege 27′, 27ʺ, 27‴, die in Umfangsrichtung äquidistant zueinander angeordnet sind und die zwischen dem Gehäuse 26 und der Hülse 29 verlaufen. Zwischen den benachbarten Stegen sind jeweils Zwischenräume 38, 38', 38" ausgebildet, durch die in dem gezeigten Beispiel das gesamte geförderte Medium strömt.

Figur 5 zeigt eine schematische Ansicht des Medienspaltmotors 10 gemäß einer weiteren Ausführung. In diesem Ausführungsbeispiel ist das Verdichterrad 13 an einem stromaufwärtsliegenden Ende der Welle 15 angeordnet. In einem sich stromabwärts daran anschließenden Abschnitt sind die Haltestege 27 mit der zylindrischen Hülse 29 zur radialen Lagerung der Welle 15 angeordnet. Stromabwärts davon ist der Rotormagnet 22 angeordnet, über den die Welle 15 im Zusammenwirken mit den Statorwicklungen 23 antreibbar ist. Daran schließen sich an einem stromabwärtsliegenden Ende die weiteren Haltestege 28 mit der weiteren zylindrischen Hülse 30 an, die ebenfalls die Welle 15 radial lagern. Die Hülsen 29, 30 bilden zudem eine axiale Lagerung der Welle 15, indem die Hülsen 29, 30 mit Abschnitten, von dem einer mit dem Bezugszeichen 31 gekennzeichnet ist, an zugehörigen Stufen 36, 36' der Welle 15 angreifen.

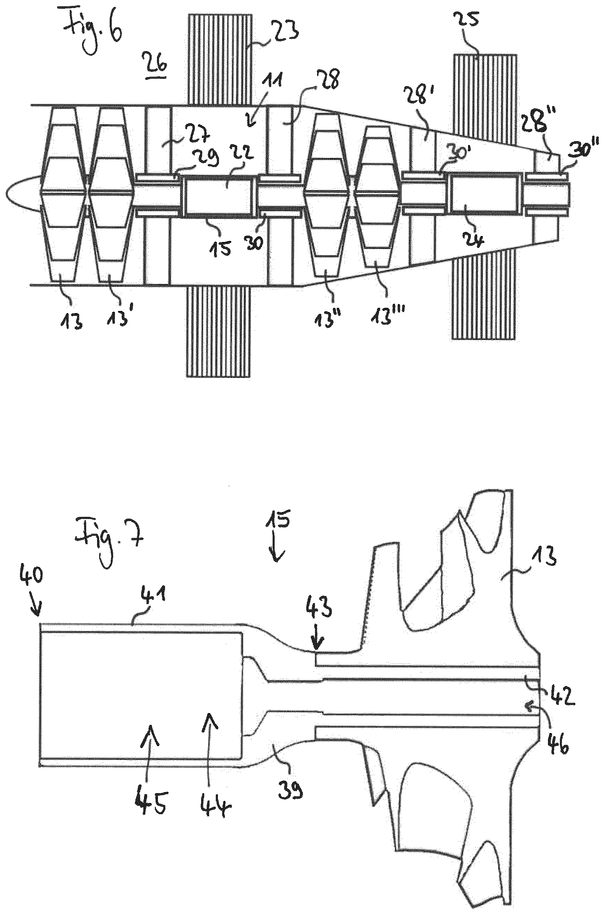

Figur 6 zeigt einen Medienspaltmotor gemäß einer weiteren Ausführung. In dieser Ausführung sind mehrere Verdichterräder 13, 13', 13", 13'" vorgesehen, die im Strömungsraum 11 angeordnet und drehfest auf der Welle 15 befestigt sind. Neben den Haltestegen 27 und weiteren Haltestegen 28 mit zugehörigen Hülsen 29, 30 sind noch weitere Haltestege 28', 28" mit zugehörigen Hülsen 30', 30" an unterschiedlichen axialen Stellen zur radialen Lagerung der Welle 15 vorgesehen. Die Haltestege 27, 28, 28', 28" sind sämtlich im Strömungsraum 11 angeordnet. Die Welle 15 ist über den Rotormagneten 22 und den weiteren Rotormagneten 24 sowie die zugehörigen Statorwicklungen 23, 25 antreibbar.

In Fig. 7 ist eine Schnittansicht dargestellt, die die oben beschriebene Welle 15 in größerem Detail zeigt. Die Welle 15 umfasst eine einstückige Armierung 39, die bis zu einem axialen Ende 40 der Welle reicht. Die Armierung 39 ist beispielsweise aus Chromstahl gefertigt und weist einen ersten Abschnitt 41 und einen zweiten Abschnitt 42 auf. Der zweite Abschnitt 42 hat einen geringeren Außendurchmesser als der ersten Abschnitt 41 und der erste Abschnitt 41 schließt mit einer die Welle 15 in Umfangrichtung umlaufenden Stufe 43 ab, die bei Blickrichtung vom zweiten Abschnitt 42 zum ersten Abschnitt 41 eine Stufe nach oben darstellt. In typischen Ausführungen liegt der zweite Abschnitt 42 stromabwärts vom ersten Abschnitt 41. Zwischen dem ersten Abschnitt 41 und dem zweiten Abschnitt sowie zwischen dem ersten Abschnitt 41 und der Stufe 43 verringert sich der Außendurchmesser der Welle 15 in Richtung des zweiten Abschnitts 42.

Die Armierung 39 weist einen durchgehenden Hohlraum 44 auf, der einen ersten Bereich 45 und einen zweiten Bereich 46 aufweist. In einigen Ausführungen erstreckt sich der Hohlraum 44 durch die gesamte Welle 15 und/oder bis in den Bereich des gegebenenfalls vorgesehenen und oben beschriebenen Turbinenrads 14 und/oder des weiteren Rotormagneten 24. Der erste Bereich 45 des Hohlraums 44 ist im ersten Abschnitt 41 der Armierung 39 ausgebildet, während der zweite Bereich 46 des Hohlraums 44 im zweiten Abschnitt 42 der Armierung 39 gebildet ist. In dem ersten Bereich 45 des Hohlraums 44 wird der Rotormagnet 22 aufgenommen. In dem zweiten Bereich 46 wird ein Wellenstab aufgenommen, der mit dem Rotormagneten 22 verbunden werden kann.

Das Verdichterrad 13, das beispielsweise aus Aluminium gefertigt sein kann, ist im zweiten Abschnitt 42 der Armierung 39 so auf der Armierung 39 angeordnet, beispielsweise aufgepresst, dass das Verdichterrad 13, insbesondere flächig, an der Stufe 43 der Armierung 39, im gezeigten Beispiel an einer Fläche der Stufe, die sich quer zur axialen Richtung erstreckt, anliegt und sich an der Stufe 43 abstützt. Ein Innendurchmesser der Armierung 39 im ersten Abschnitt 41, der den Rotormagneten 22 aufnimmt, ist größer als der Außendurchmesser der Armierung 39 im zweiten Abschnitt 42, auf dem das Verdichterrad 13 angeordnet ist. Auf diese Weise kann der Rotormagnet 22 einen Außendurchmesser aufweisen, der größer ist als ein Innendurchmesser des Verdichterrads 13, wodurch durch vorteilhafte magnetische Eigenschaften sowie Strömungseigenschaften eine höhere Effizienz des Medienspaltmotors erreicht werden kann.

Lediglich in den Ausführungsbeispielen offenbarte Merkmale der verschiedenen Ausführungsformen können miteinander kombiniert und einzeln beansprucht werden.

## Patentansprüche

1. Medienspaltmotor (10) für ein Brennstoffzellensystem (1) mit einer Welle (15), in der ein Rotormagnet (22) aufgenommen ist, einem Stator mit Statorwicklungen (23) zum elektrischen Antreiben einer Drehung der Welle (15),
einem Gehäuse (26), das einen zwischen der Welle (15) und dem Stator ausgebildeten Strömungsraum (11) begrenzt, und
einem in dem Strömungsraum (11) und auf der Welle (15) angeordneten Verdichterrad (13),
**gekennzeichnet durch**
Haltestege (27), die sich im Strömungsraum (11) zur radialen Lagerung der Welle (15) zwischen dem Gehäuse (26) und der Welle (15) erstrecken.

2. Medienspaltmotor (10) nach Anspruch 1, **gekennzeichnet durch** ein Turbinenrad (14), das auf der Welle (15) angeordnet ist, wobei das Gehäuse (26) einen weiteren Strömungsraum (11) begrenzt und das Turbinenrad (14) in dem weiteren Strömungsraum (11) angeordnet ist, und **gekennzeichnet durch** weitere Haltestege (28), die sich im weiteren Strömungsraum (11) zur radialen Lagerung der Welle (15) zwischen dem Gehäuse (26) und der Welle (15) erstrecken.

3. Medienspaltmotor (10) nach Anspruch 2, **dadurch gekennzeichnet, dass** das Verdichterrad (13) und das Turbinenrad (14) zwischen den Haltestegen (27) und den weiteren Haltestegen (28) angeordnet sind.

4. Medienspaltmotor (10) nach einem der Ansprüche 1 bis 3, **dadurch gekennzeichnet, dass** die Welle (15) eine einstückige Armierung (39) mit einem ersten Abschnitt (41) und einem zweiten Abschnitt (42) aufweist, wobei im Inneren des ersten Abschnitts (41) der Armierung (39) der Rotormagnet (22) aufgenommen ist und auf dem zweiten Abschnitt (42) der Armierung (39) das Verdichterrad (13) angeordnet ist.

5. Medienspaltmotor (10) nach Anspruch 4, **dadurch gekennzeichnet, dass** der erste Abschnitt (41) der Armierung (39) einen größeren Außendurchmesser aufweist als der zweite Abschnitt (42) der Armierung (39).

6. Medienspaltmotor (10) nach einem der Ansprüche 4 oder 5, **dadurch gekennzeichnet, dass** der zweite Abschnitt (42) der Armierung (39) mit einer Stufe (43) abschließt, an der das Verdichterrad (13) anliegt.

7. Medienspaltmotor (10) nach einem der Ansprüche 1 bis 6, **gekennzeichnet durch** einen Tropfenabscheider (32), der im Strömungsraum (11) am Gehäuse (26) angeordnet ist.

8. Medienspaltmotor (10) nach einem der Ansprüche 1 bis 7, **dadurch gekennzeichnet, dass** die Haltestege (27) zur Erzeugung eines Dralls in einem im Strömungsraum (11) geförderten Medium eingerichtet sind.

9. Medienspaltmotor (10) nach einem der Ansprüche 1 bis 8, **gekennzeichnet durch** einen Abschnitt (31) zur axialen Lagerung der Welle (15), wobei der Abschnitt (31) als Teil der Haltestege (27) ausgeführt oder mit den Haltestegen (27) verbunden ist.

10. Medienspaltmotor (10) nach einem der Ansprüche 1 bis 9, **dadurch gekennzeichnet, dass** die Haltestege (27) so angeordnet sind, dass die Haltestege (27) einen axialen Überlapp mit dem Rotormagneten (22) und/oder mit den Statorwicklungen (23) aufweisen.

11. Medienspaltmotor (10) nach Anspruch 10, **dadurch gekennzeichnet, dass** die Haltestege (27) zur Optimierung eines Magnetflusses einen Aktivteil eines durch Rotormagnet (22) und Statorwicklungen (23) gebildeten magnetischen Kreises bilden.

12. Brennstoffzellensystem (1), umfassend einen Medienspaltmotor (10) nach einem der Ansprüche 1 bis 11.

13. Brennstoffzellensystem nach Anspruch 12, **dadurch gekennzeichnet, dass** das Verdichterrad (13) in einem Kanal zum Führen eines Brennstoffs oder in einem Kanal zum Führen eines Oxidationsmittels angeordnet ist.

14. Brennstoffzellensystem nach Anspruch 13, wobei dieses auf einen Medienspaltmotor (10) nach Anspruch 2 rückbezogen ist, **gekennzeichnet durch** eine Oxidationsmittelzufuhrleitung (5) zum Zuführen von Oxidationsmittel zu einer Brennstoffzelle (2) und eine Abfuhrleitung (6) zum Abführen von Oxidationsmittel und/oder eines Reaktionsproduktes von der Brennstoffzelle (2), wobei der Strömungsraum (11), in dem das Verdichterrad (13) angeordnet ist, einen Teil der Oxidationsmittelzufuhrleitung (5) bildet und wobei der weitere Strömungsraum (11), in dem das Turbinenrad (14) angeordnet ist, einen Teil der Abfuhrleitung (6) bildet.

15. Verwendung eines Medienspaltmotors (10) nach einem der Ansprüche 1 bis 11 oder eines Brennstoffzellensystems nach einem der Ansprüche 12 bis 14 zur Bereitstellung von elektrischer Antriebsleistung in einem Fahrzeug.
